# EUROPEAN PATENT APPLICATION

(11) **EP 4 755 716 A1**
(43) Date of publication of application: **10.06.2026**
(21) Application number: 25195587.8
(22) Date of filing: 13.08.2025
(51) Int. Cl.: B60Q 1/26, B60Q 1/30, F21S 43/20, F21S 43/50, B60Q 1/00, F21W 103/00, F21W 104/00

(54) **REAR LIGHTING DEVICE FOR A VEHICLE**

(30) Priority: 04.12.2024 KR 20240178650; 04.12.2024 KR 20240178651; 10.12.2024 KR 20240182697
(71) Applicant: Hyundai Mobis Co., Ltd., Gangnam-gu Seoul 06141 (KR)
(72) Inventor: KIM, Min Ji, 16891 Yongin-si, Gyeonggi-do (KR); KIM, Do Hyung, 16891 Yongin-si, Gyeonggi-do (KR); KIM, Phil Su, 16891 Yongin-si, Gyeonggi-do (KR)
(74) Representative: Jung, Minkyu

(57) **Abstract**

Provided is a rear lighting device for a vehicle, including a light source portion configured to emit light, a lamp portion arranged in front of the light source portion, a pattern layer portion arranged in front of the light source portion and configured to have pattern portions having different light transmittances, and a color layer portion arranged in front of the pattern layer portion and configured to include a light-transmissive material.

## Description

### BACKGROUND

### FIELD

The present disclosure relates to a rear lighting device for a vehicle and, more particularly, to a rear lighting device for a vehicle capable of providing rear lighting.

### DISCUSSION OF THE BACKGROUND

Recently, automobile manufacturers have attempted to create new value by increasing the visual density of the vehicle's rear with distinctive lighting images, and have invested heavily in rear lighting to achieve eye-catching visual effects.

Conventionally, rear lighting content and technological solutions capable of effectively expressing brand identity have had limitations. As the lighting area expanded, various issues have risen, such as increased development costs and production costs, as well as added weight due to the use of multiple lighting devices. Therefore, these issues require improvement.

The related art of the present disclosure is disclosed in Korean Patent Application Publication No. 10-2023-0077201 (published on June 1, 2023 and entitled "The lighting grill for the electric vehicle").

### SUMMARY

Various aspects of the present disclosure are directed to a rear lighting device for a vehicle capable of providing a three-dimensional image to drivers, adjacent vehicles, and pedestrians by implementing rear lighting.

A rear lighting device for a vehicle according to an aspect of the present disclosure includes a light source portion configured to emit light, a lamp portion arranged in front of the light source portion, a pattern layer portion arranged in front of the light source portion and configured to have pattern portions having different light transmittances, and a color layer portion arranged in front of the pattern layer portion and configured to include a light-transmissive material.

The color layer portion may have the same color as the vehicle body.

The color layer portion may include a film having the same color as the vehicle body or a film coated with paint having the same color as the vehicle body.

The rear lighting device for a vehicle may further include a cover portion arranged in front of the color layer portion to cover the color layer portion and made of a transparent material.

The pattern portion may include a first pattern portion through which light emitted from the light source portion passes and a second pattern portion configured to have lower light transmittance than the first pattern portion.

The pattern portion may further include a third pattern portion formed in the shape of stripes, arranged across the first pattern portion and the second pattern portion, and configured to have lower light transmittance than the first pattern portion.

The rear lighting device for a vehicle may further include a housing portion configured to house the light source portion, the lamp portion and the pattern layer portion and mounted on a rear portion of the vehicle body.

The housing portion may include a center housing mounted on a tailgate and a side housing mounted on a rear main body of the vehicle.

The center housing and the side housing may be arranged alongside each other.

The lamp portion may be arranged so as not to overlap the pattern layer portion.

A rear lighting device for a vehicle according to another aspect of the present disclosure includes a light source portion configured to emit light, a lamp portion arranged in front of the light source portion, a shielding layer portion that includes a shielding portion arranged in front of the lamp portion and configured to shield light emitted from the light source portion, and a first pattern portion through which the light emitted from the light source portion is transmitted, and a pattern layer portion arranged in front of the shielding layer portion, configured to include a light-transmissive material, and configured to have a second pattern portion.

The rear lighting device for a vehicle may further include a color layer portion arranged between the shielding layer portion and the pattern layer portion, and configured to include a light-transmissive material.

The color layer portion may include a film having the same color as the vehicle body or a film coated with paint having the same color as the vehicle body.

The rear lighting device for a vehicle may further include a cover portion arranged in front of the pattern layer portion to cover the pattern layer portion and made of a transparent material.

The second pattern portion may include a three-dimensional pattern visible from the outside.

The first pattern portion may be arranged to overlap the second pattern portion.

The rear lighting device for a vehicle may further include a housing portion configured to house the light source portion, the lamp portion, the shielding layer portion, and the pattern layer portion, and mounted on a rear portion of the vehicle body.

The housing portion may include a center housing mounted on a tailgate and a side housing mounted on a rear main body of the vehicle.

The center housing and the side housing may be arranged alongside each other.

The lamp portion may be arranged so as not to overlap the shielding layer portion.

A rear lighting device for a vehicle according to yet another aspect of the present disclosure includes a light source portion configured to emit light, a lamp portion arranged in front of the light source portion, a first pattern layer portion arranged in front of the light source portion, configured to have a first pattern portion, and configured to include a light-transmissive material, and a second pattern layer portion arranged in front of the first pattern layer portion, configured to have a second pattern portion, and configured to include a light-transmissive material.

The second pattern layer portion may have the same color as a vehicle body.

The lighting device for a vehicle may further include a cover portion arranged in front of the second pattern layer portion to cover the second pattern layer portion, and the first pattern portion may include a three-dimensional pattern that is visible from the outside through the cover portion.

The three-dimensional pattern may be a lencell pattern or a lenticular pattern.

The second pattern portion may be provided at both end portions of the second pattern layer portion.

The rear lighting device for a vehicle may further include a gradation layer portion that is arranged between the first pattern layer portion and the second pattern layer portion and include a light-transmissive material.

The rear lighting device for a vehicle may further include a housing portion configured to house the light source portion, the lamp portion, the first pattern layer portion, and the second pattern layer portion, and mounted on a rear portion of the vehicle body.

The housing portion may include a center housing mounted on a tailgate and a side housing mounted on a rear main body of the vehicle.

The center housing and the side housing may be arranged alongside each other.

The lamp portion may be arranged so as not to overlap the first pattern layer portion.

In the rear lighting device for a vehicle, when the light source portion is turned off, the pattern portion of the pattern layer portion is invisible from outside the vehicle, and the color layer portion, having the same color as the vehicle body, is visible from outside the vehicle.

The rear lighting device for a vehicle may achieve natural and three-dimensional rear lighting by having the pattern layer portion, in which a pattern is generated based on the degree of shielding when the light source portion is turned on, visible in front of the transmissive color layer portion.

The rear lighting device for a vehicle may have a distinct competitive advantage by providing rear images both when turned on and when turned off.

The rear lighting device for a vehicle may express a three-dimensional optical illusion pattern on a vehicle skin by utilizing a pattern layer portion including a three-dimensional pattern, through which a three-dimensional image is created.

With the rear lighting device for a vehicle, a lighting effect hidden by the shielding layer portion when turned off becomes visible when turned on, allowing different rear images to be produced under daytime and nighttime conditions.

### BRIEF DESCRIPTION OF THE DRAWINGS

FIG. 1 is a front view of a rear lighting device for a vehicle according to a first embodiment of the present disclosure, viewed from the rear of a vehicle body.
FIG. 2 is a cross-sectional view schematically showing a rear lighting device for a vehicle according to the first embodiment of the present disclosure.
FIG. 3 is an exploded perspective view schematically showing a rear lighting device for a vehicle according to the first embodiment of the present disclosure.
FIG. 4 is a plan view showing a pattern layer portion in a rear lighting device for a vehicle according to the first embodiment of the present disclosure.
FIG. 5 is an illustrative view schematically showing a state in which a light source portion is turned off in a rear lighting device for a vehicle according to the first embodiment of the present disclosure.
FIG. 6 is an illustrative view schematically showing a state in which a light source portion is turned on in a rear lighting device for a vehicle according to the first embodiment of the present disclosure.
FIG. 7 is a front view of a rear lighting device for a vehicle according to the first embodiment of the present disclosure, viewed from the rear of a vehicle body in a state in which a light source portion is turned off.
FIG. 8 is a front view of a rear lighting device for a vehicle according to the first embodiment of the present disclosure, viewed from the rear of a vehicle body in a state in which a light source portion is turned on.
FIG. 9 is a front view of a rear lighting device for a vehicle according to a second embodiment of the present disclosure, viewed from the rear of a vehicle body.
FIG. 10 is a cross-sectional view schematically showing a rear lighting device for a vehicle according to the second embodiment of the present disclosure.
FIG. 11 is an exploded perspective view schematically showing a rear lighting device for a vehicle according to the second embodiment of the present disclosure.
FIG. 12 is an illustrative view schematically showing a state in which a light source portion is turned off in a rear lighting device for a vehicle according to the second embodiment of the present disclosure.
FIG. 13 is an illustrative view schematically showing a state in which a light source portion is turned on in a rear lighting device for a vehicle according to the second embodiment of the present disclosure.
FIG. 14 is an enlarged view of a shielding layer portion in a rear lighting device for a vehicle according to the second embodiment of the present disclosure.
FIG. 15 is an enlarged view of a pattern layer portion in a rear lighting device for a vehicle according to the second embodiment of the present disclosure.
FIG. 16 is a front view of a rear lighting device for a vehicle according to the second embodiment of the present disclosure, viewed from the rear of a vehicle body in a state in which a light source portion is turned off.
FIG. 17 is a front view of a rear lighting device for a vehicle according to the second embodiment of the present disclosure, viewed from the rear of a vehicle body in a state in which a light source portion is turned on.
FIG. 18 is a front view of a rear lighting device for a vehicle according to a third embodiment of the present disclosure, viewed from the rear of a vehicle body.
FIG. 19 is a cross-sectional view schematically showing a rear lighting device for a vehicle according to the third embodiment of the present disclosure.
FIG. 20 is an exploded perspective view schematically showing a rear lighting device for a vehicle according to the third embodiment of the present disclosure.
FIG. 21 is an illustrative view schematically showing a state in which a light source portion is turned off in a rear lighting device for a vehicle according to the third embodiment of the present disclosure.
FIG. 22 is an illustrative view schematically showing a state in which a light source portion is turned on in a rear lighting device for a vehicle according to the third embodiment of the present disclosure.
FIG. 23 is a front view of a rear lighting device for a vehicle according to the third embodiment of the present disclosure, viewed from the rear of a vehicle body in a state in which a light source portion is turned off.
FIG. 24 is a front view of a rear lighting device for a vehicle according to the third embodiment of the present disclosure, viewed from the rear of a vehicle body in a state in which a light source portion is turned on.

### DETAILED DESCRIPTION

Embodiments of a rear lighting device for a vehicle according to the present disclosure will be described hereinafter with reference to the accompanying drawings. In this process, the thickness of lines and the size of elements illustrated in the drawing may be exaggerated for clarity and convenience of description. In addition, the terms used below are defined in consideration of the functions thereof in the present disclosure and may vary depending on the intention of a user or an operator or common practice. Therefore, the definitions of such terms should be made based on the content set forth throughout the present specification.

In this specification, when a part is described as being "connected (or linked)" to another part, this includes not only cases where it is "directly connected (or linked)," but also cases where it is "indirectly connected (or linked)" to another part with an intermediate member in between. When a part is referred to as "comprising (or having)" a certain element, it means that, unless specifically stated otherwise, it does not exclude other elements but may further "comprise (or have)" other elements.

Throughout this specification, the same reference numerals may refer to the same elements. Although the same or similar reference numerals may not be mentioned or described in a specific drawing, those reference numerals may be described with reference to other drawings. Even if there are parts in a specific drawing where reference numerals are not indicated, those parts may be described based on other drawings. Furthermore, the number, shape, size, and relative differences in size of the detailed elements included in the drawings of the present disclosure are set for ease of understanding and are not intended to limit embodiments, which may be implemented in various forms.

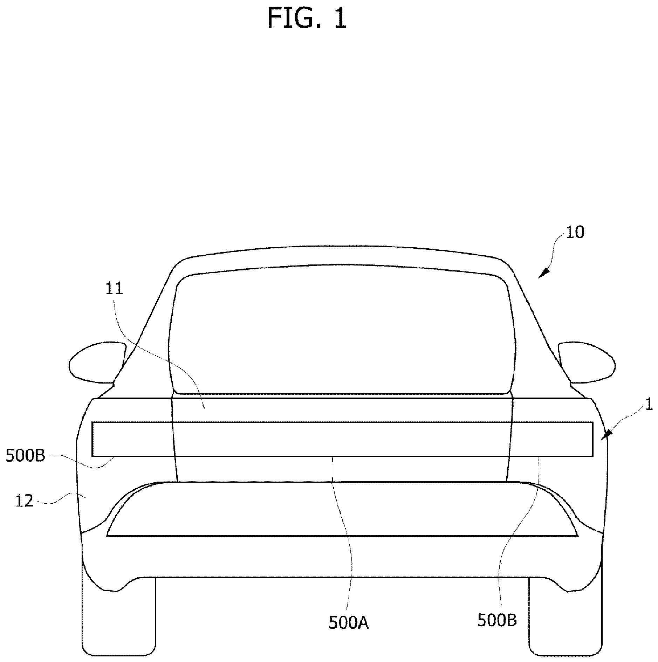

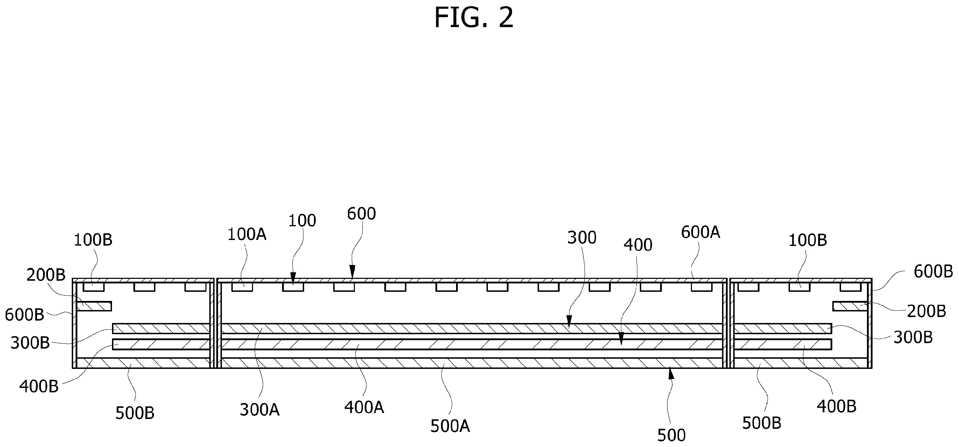

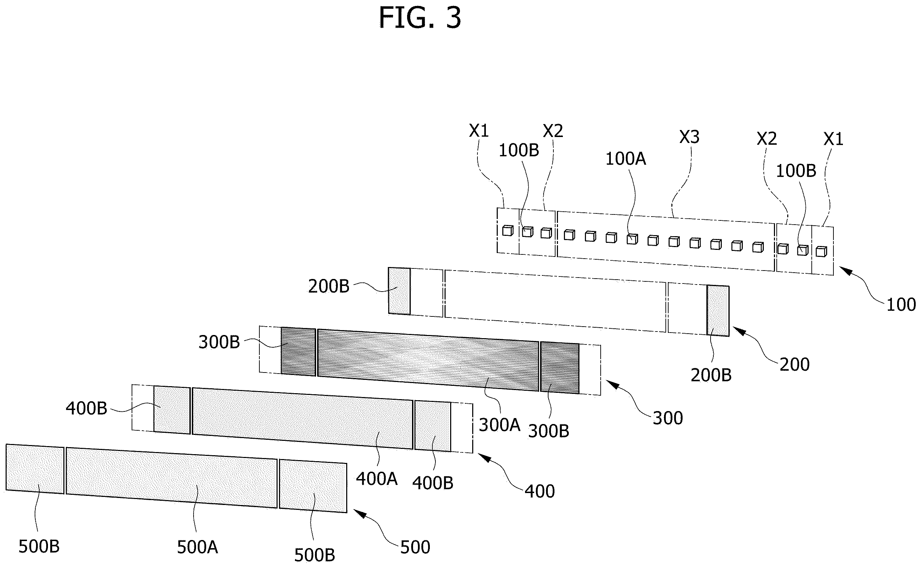

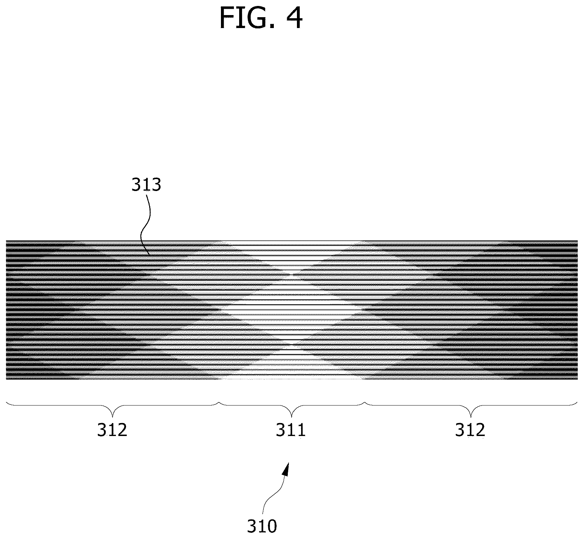

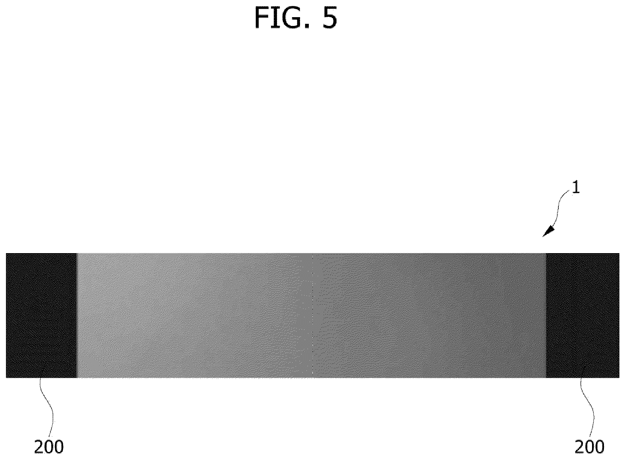

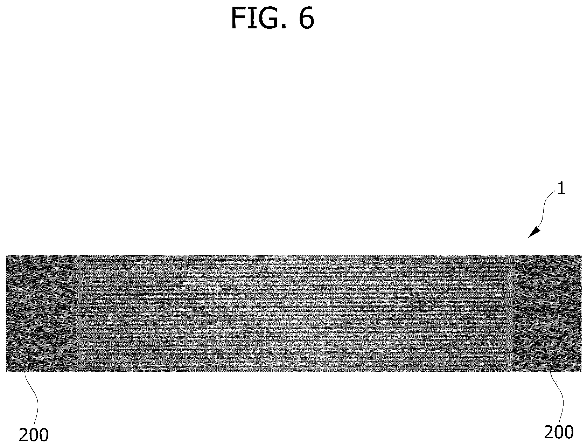

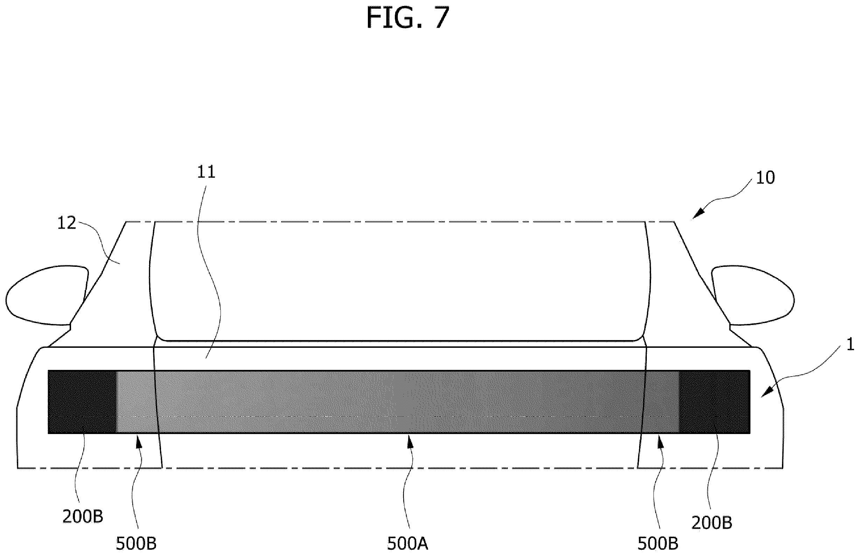

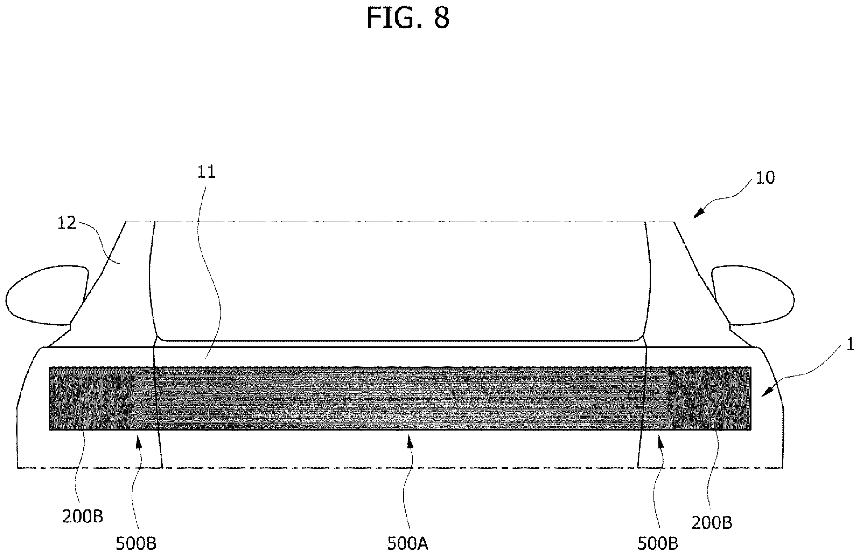

FIG. 1 is a front view of a rear lighting device for a vehicle according to a first embodiment of the present disclosure, viewed from the rear of a vehicle body. FIG. 2 is a cross-sectional view schematically showing a rear lighting device for a vehicle according to the first embodiment of the present disclosure. FIG. 3 is an exploded perspective view schematically showing a rear lighting device for a vehicle according to the first embodiment of the present disclosure. FIG. 4 is a plan view showing a pattern layer portion in a rear lighting device for a vehicle according to the first embodiment of the present disclosure. FIG. 5 is an illustrative view schematically showing a state in which a light source portion is turned off in a rear lighting device for a vehicle according to the first embodiment of the present disclosure. FIG. 6 is an illustrative view schematically showing a state in which a light source portion is turned on in a rear lighting device for a vehicle according to the first embodiment of the present disclosure. FIG. 7 is a front view of a rear lighting device for a vehicle according to the first embodiment of the present disclosure, viewed from the rear of a vehicle body in a state in which a light source portion is turned off. FIG. 8 is a front view of a rear lighting device for a vehicle according to the first embodiment of the present disclosure, viewed from the rear of a vehicle body in a state in which a light source portion is turned on.

Referring to FIGS. 1 to 8, a rear lighting device for a vehicle 1 according to the first embodiment of the present disclosure includes a light source portion 100, a lamp portion 200, and a pattern layer portion 300. The rear lighting device for a vehicle 1 according to the first embodiment of the present disclosure may further include a housing portion 600.

The light source portion 100, the lamp portion 200, and the pattern layer portion 300 may be housed in the housing portion 600. The housing portion 600 may have a box shape and be formed with an open front face facing toward the rear of the vehicle body 10.

The housing portion 600 may be mounted on the vehicle body 10. The housing portion 600 may be mounted on a rear portion of the vehicle body 10. The rear portion of the vehicle body 10 may include a tailgate 11 and a rear main body 12. The tailgate 11 here is used in a broad sense to include not only a tailgate in the narrow sense, such as that of a sport utility vehicle, but also a trunk lid of a passenger car.

The housing portion 600 may include a center housing 600A and a side housing 600B. The center housing 600A may be mounted on the tailgate 11, and the side housing 600B may be mounted on the rear main body 12 so as to be arranged alongside the center housing 600A.

A first light source 100A and a center pattern layer 300A may be housed in the center housing 600A. An opening of the center housing 600A may be covered by a center cover 500A.

A second light source 100B, a lamp 200B, and a side pattern layer 300B may be housed in a side housing 600B. An opening of the side housing 600B may be covered by a side cover 500B.

The light source portion 100 may be installed inside the housing portion 600. The light source portion 100 may emit light toward the front of the lamp portion 200 or the pattern layer portion 300. Front here refers to the direction in which light is emitted from the light source portion 100. Since the present embodiment relates to the rear lighting device for a vehicle 1, when the light source portion 100 emits light toward the front of the lamp portion 200 or the pattern layer portion 300, the light is directed to the rear of the vehicle.

The light from the light source portion 100 passes through a cover portion 500 and is emitted outward, making the light visible from outside the rear lighting device for a vehicle 1. A plurality of light source portions 100 may be provided and spaced apart along a width direction of the vehicle body 10. The light source portion 100 may include a light emitting diode (LED).

The rear lighting device for a vehicle 1 may include a plurality of areas arranged along the width direction of the vehicle body 10. In FIG. 3, the rear lighting device for a vehicle 1 may be divided into an X1 area (X1), an X2 area (X2), and an X3 area (X3) arranged along the width direction of the vehicle body 10. The X1 area (X1) and the X2 area (X2) may be arranged on the rear main body 12, and the X3 area (X3) may be arranged on the tailgate 11.

The light source portion 100 may include a first light source 100A arranged on the tailgate 11 or in the X3 area (X3), and a second light source 100B arranged on the rear main body 12 or in the X1 area (X1) and the X2 area (X2).

The lamp portion 200 may be arranged in front of the light source portion 100. The lamp portion 200 may be a tail lamp. The lamp portion 200 may include lamps 200B arranged on both sides of the rear main body 12. The lamp 200B may be arranged in the X1 area (X1).

The pattern layer portion 300 may be arranged in front of the light source portion 100 or the lamp portion 200. The pattern layer portion 300 may include a transmissive material that allows light emitted from the light source portion 100 to pass through. The pattern layer portion 300 may be formed in the shape of a thin film or lens.

The pattern layer portion 300 may be provided with pattern portions 310 having different light transmittances. The pattern portion 310 may include a plurality of unit patterns having a rhombus shape with angled corners and shared edges, arranged along the width direction and the longitudinal direction of the pattern layer portion 300.

The pattern portion 310 may be visible from the outside. For example, when the light source portion 100 is turned on under nighttime conditions, the pattern portion 310 may be visible from outside the vehicle through the cover portion 500. Conversely, when the light source portion 100 is turned off under daytime conditions, the pattern portion 310 may be shielded by the color included in a color layer portion 400 and may not be visible from outside the vehicle.

The pattern portion 310 may include a first pattern portion 311 and a second pattern portion 312.

The first pattern portion 311 is arranged in a central portion of the pattern layer portion 300, and all or most of the light emitted from the light source portion 100 may pass therethrough. The light transmittance of the first pattern portion 311 may be approximately 90%, and more specifically, may be 99% or more.

The second pattern portion 312 may be arranged on both sides of the first pattern portion 311. The second pattern portion 312 may be provided on both longitudinal sides of the pattern layer portion 300.

The second pattern portion 312 may be configured to have lower light transmittance than the first pattern portion 311. The second pattern portion 312 may include a dye or pigment having a set color. The second pattern portion 312 may be configured to have lower transparency than the first pattern portion 311.

The second pattern portion 312 may include a gradient pattern. The second pattern portion 312 may include a gradient pattern that becomes gradually less transparent toward both end portions of the pattern layer portion 300. As the transparency of the second pattern portion 312 gradually decreases toward both end portions of the pattern layer portion 300, the light transmittance of the second pattern portion 312 may also decrease toward both end portions of the pattern layer portion 300.

The pattern portion 310 may further include a third pattern portion 313. The third pattern portion 313 may be formed in the shape of stripes, which are arranged across the first pattern portion 311 and the second pattern portion 312. In detail, the third pattern portion 313 may be arranged along the longitudinal direction of the pattern layer portion 300.

The third pattern portion 313 may be configured to have lower light transmittance than the first pattern portion 311. The third pattern portion 313 may be configured to have lower transparency than the first pattern portion 311. A line-shaped third pattern portion 313, having lower light transmittance than the first pattern portion 311, is arranged across the first pattern portion 311 and the second pattern portion 312, thereby enabling a more refined rear lighting image to be achieved.

According to the present embodiment, various rear lighting effects may be produced by changing the design of at least one of the first pattern portion 311, the second pattern portion 312, or the third pattern portion 313.

The pattern layer portion 300 may include a center pattern layer 300A arranged on the tailgate 11 and side pattern layers 300B arranged on both sides of the rear main body 12. When the tailgate 11 is closed, the center pattern layer 300A and the side pattern layer 300B may be arranged at the same height.

The side pattern layer 300B may be arranged so as not to overlap the lamp 200B. In the present embodiment, the side pattern layer 300B may be arranged exclusively in the X2 area (X2) and not arranged in the X1 area (X1). Accordingly, light emitted from the light source portion 100 and passing through the lamp 200B is directed forward without passing through the side pattern layer 300B. The center pattern layer 300A may be arranged in the X3 area (X3).

Both the center pattern layer 300A and the side pattern layer 300B may include pattern portions 310 having different light transmittances. Accordingly, both the center pattern layer 300A and the side pattern layer 300B may include the first pattern portion 311 and the second pattern portion 312, and may further include the third pattern portion 313.

The rear lighting device for a vehicle 1 according to the first embodiment of the present disclosure may further include the color layer portion 400.

The color layer portion 400 may be arranged in front of the pattern layer portion 300. Since the color layer portion 400 includes a light-transmissive material, light from the light source portion 100 passes through the pattern layer portion 300 and is emitted forward through the color layer portion 400.

The color layer portion 400 may include a film having the same color as the vehicle body. Alternatively, the color layer portion 400 may include a film coated with paint having the same color as the vehicle body.

Since the color layer portion 400 has the same color as the vehicle body 10, the rear lighting device for a vehicle 1 may create a continuous image without a sense of disconnection from the vehicle body 10.

The color layer portion 400 may be provided on a first surface of the cover portion 500. The first surface here may refer to an inner surface of the cover portion 500 that faces a direction in which the light source portion 100 is positioned, and a second surface of the cover portion 500 may refer to an outer surface of the cover portion 500 arranged to face a direction opposite to the first surface. The color layer portion 400 according to the present embodiment may be arranged between the cover portion 500 and the light source portion 100.

The color layer portion 400 may include a film attached to the first surface of the cover portion 500. The film may be attached to the cover portion 500 through an autoclave process. The color of the film may be the same as or similar to that of the vehicle body 10. In another embodiment, the color layer portion 400 may include a coating layer painted on the first surface of the cover portion 500. The color of the coating layer may be the same as or similar to that of the vehicle body 10.

The color layer portion 400 may be visible from the outside. For example, when the light source portion 100 is turned off under daytime conditions, the color layer portion 400 may be visible from outside the vehicle through the cover portion 500.

The color layer portion 400 may include a center color layer 400A arranged on the tailgate 11 and side color layers 400B arranged on both sides of the rear main body 12. When the tailgate 11 is closed, the center color layer 400A and the side color layer 400B may be arranged at the same height. Accordingly, the center color layer 400A and the side color layers 400B may appear continuous rather than disconnected.

The side color layer 400B may be arranged so as not to overlap the lamp 200B. In the present embodiment, the side color layer 400B may be arranged exclusively in the X2 area (X2) and not arranged in the X1 area (X1). The center color layer 400A may be arranged in the X3 area (X3).

The center color layer 400A may be housed in the center housing 600A, and the side color layers 400B may be housed in the side housings 600B.

The lamp portion 200 may be arranged so as not to overlap the pattern layer portion 300 and the color layer portion 400. Accordingly, when the lamp portion 200 performs the tail lamp function, the lamp portion 200 is not affected by the pattern layer portion 300 and the color layer portion 400.

The rear lighting device for a vehicle 1 according to the first embodiment of the present disclosure may further include the cover portion 500.

The cover portion 500 is arranged in front of the color layer portion 400 and covers the color layer portion 400. The cover portion 500 may be made of plastic such as polymethyl methacrylate (PMMA) and include a light-transmissive material. The cover portion 500 may be transparent or red. In another embodiment, the cover portion 500 may include a translucent material.

The cover portion 500 may close the opening of the housing portion 600 to prevent foreign substances from entering the interior of the housing portion 600. The cover portion 500 may be formed with a planar or curved shape to conform to the shape of the opening of the housing portion 600. The cover portion 500 may be formed in the shape of a plate or panel.

The cover portion 500 may include a center cover 500A arranged on the tailgate 11 and side covers 500B arranged on both sides of the rear main body 12. When the tailgate 11 is closed, the center cover 500A and the side cover 500B may be arranged at the same height. Accordingly, even if the center cover 500A and the side covers 500B are separately mounted on the tailgate 11 and the rear main body 12, respectively, a sense of continuity or unity may be achieved.

The center cover 500A may be arranged in the X3 area (X3), and the side covers 500B may be arranged in the X1 area (X1) and the X2 area (X2).

The rear lighting device for a vehicle 1 according to the first embodiment of the present disclosure may further include an outer layer portion. The outer layer portion may be coated on the cover portion 500 to cover the cover portion 500. The outer layer portion may include a polyurethane material. The outer layer portion may be coated on the cover portion 500 and may protect one side of the cover portion 500, on which the color layer portion 400 is provided, from external contamination.

An operation of the rear lighting device for a vehicle 1 according to the first embodiment of the present disclosure, configured as described above, is as follows.

Referring to FIGS. 5 and 7, when the light source portion 100 is turned off under daytime conditions, the pattern layer portion 300 provided in the rear lighting device for a vehicle 1 may not be visible from outside the vehicle through the cover portion 500. Since the color layer portion 400 is arranged behind the pattern layer portion 300, the pattern portion 310 provided in the pattern layer portion 300 may be shielded by the color included in the color layer portion 400 and may not be visible from outside the vehicle through the cover portion 500.

The color layer portion 400 may be visible from outside the vehicle through the cover portion 500. In detail, even if the light source portion 100 is turned off under daytime conditions, the color included in the color layer portion 400 may be visible from outside the vehicle through the cover portion 500. When the light source portion 100 is turned off, the lamp portion 200 may also be turned off, and accordingly, the tail lamp may not operate.

Referring to FIGS. 6 and 8, when the light source portion 100 is turned on under nighttime conditions, the color layer portion 400 may be visible from outside the vehicle through the cover portion 500, and the pattern layer portion 300 may also be visible from outside the vehicle through the cover portion 500.

When the light source portion 100 is turned on under nighttime conditions, the pattern portion 310 provided in the pattern layer portion 300, together with the color included in the color layer portion 400, may also be visible from outside the vehicle through the cover portion 500. Accordingly, when the lamp 200B performs the tail lamp function, the pattern layer portion 300 may perform an auxiliary tail lamp function beside the lamp 200B.

Light from the light source portion 100 arranged in the X2 area (X2) and the X3 area (X3) is emitted forward through the pattern layer portion 300. Accordingly, by changing the design of the pattern layer portion 300, various graphic images may be produced during nighttime illumination. When the light source portion 100 is turned on, the lamp portion 200 may also be turned on, and accordingly, the tail lamp may operate.

In the rear lighting device for a vehicle according to the first embodiment of the present disclosure, when the light source portion 100 is turned off, the pattern portion 310 of the pattern layer portion 300 may not be visible from outside the vehicle, and the color layer portion 400, which has the same color as or a similar color to the vehicle body 10, may be visible from outside the vehicle.

The rear lighting device for a vehicle according to the first embodiment of the present disclosure may achieve natural and three-dimensional rear lighting by having the pattern layer portion 300, in which a pattern is generated based on the degree of shielding when the light source portion 100 is turned on, visible in front of the color layer portion 400.

The rear lighting device for a vehicle according to the first embodiment of the present disclosure may achieve market differentiation by providing images both when turned on and when turned off.

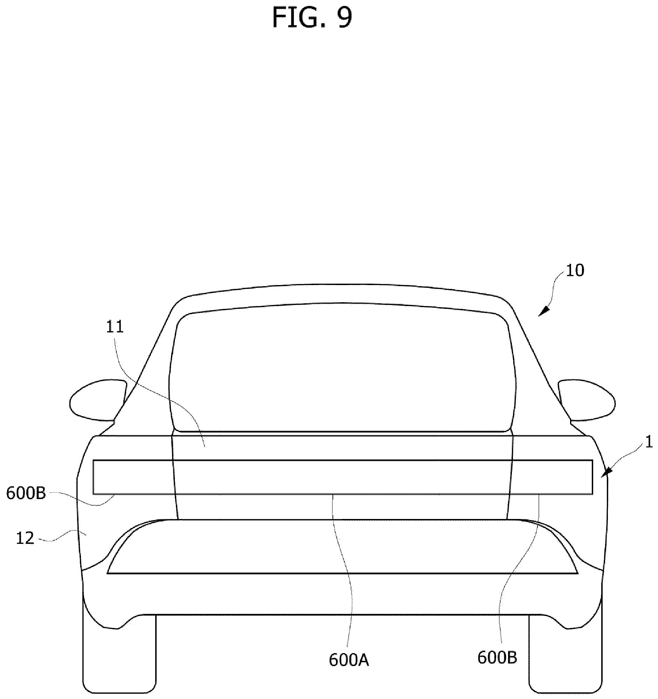

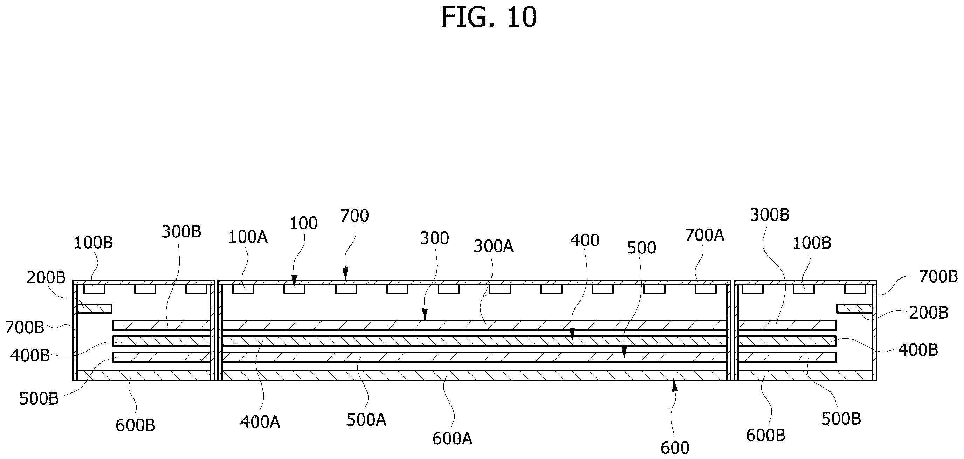

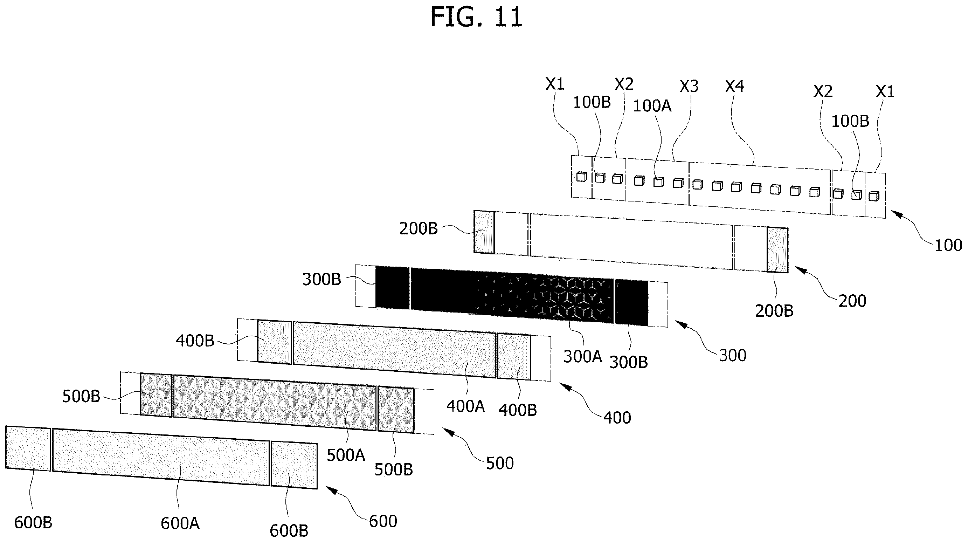

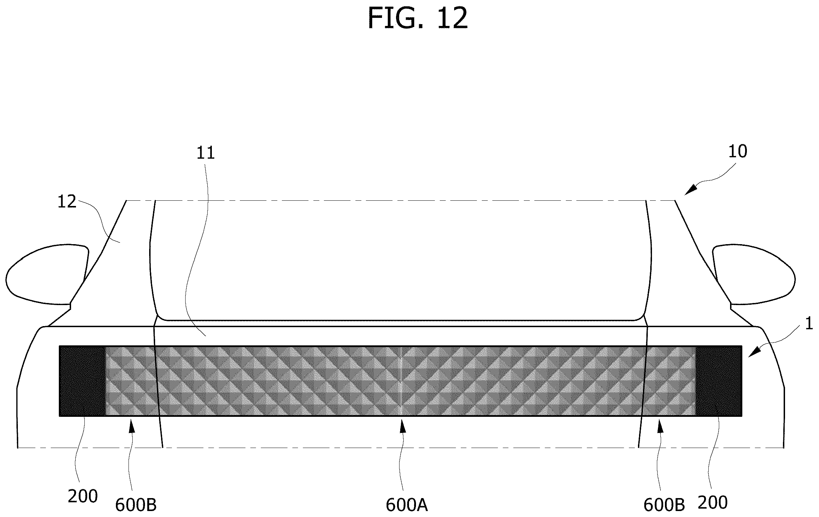

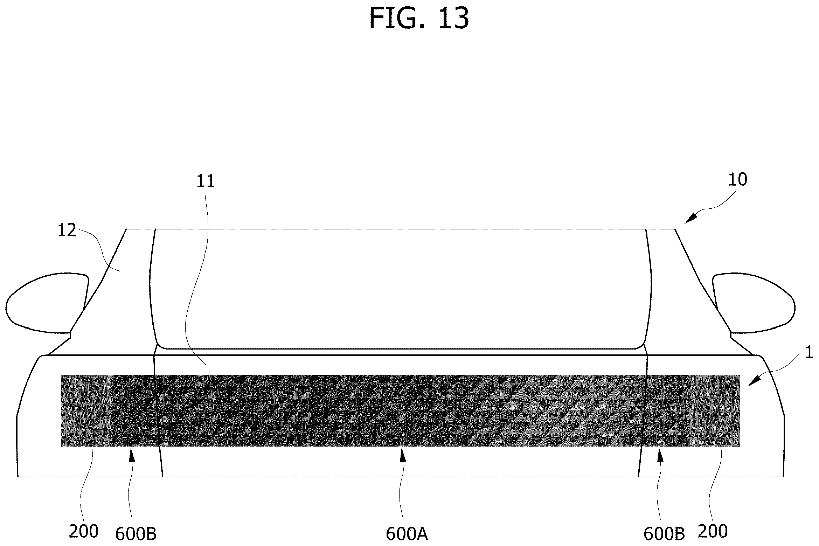

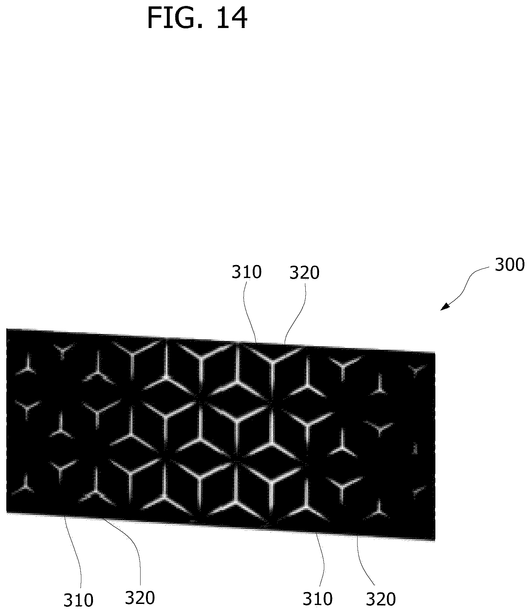

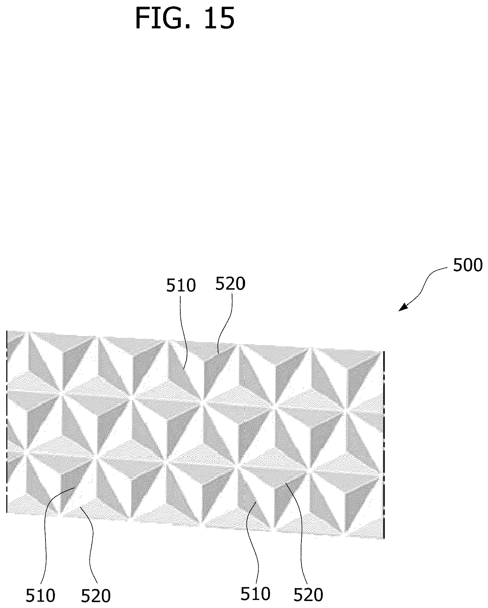

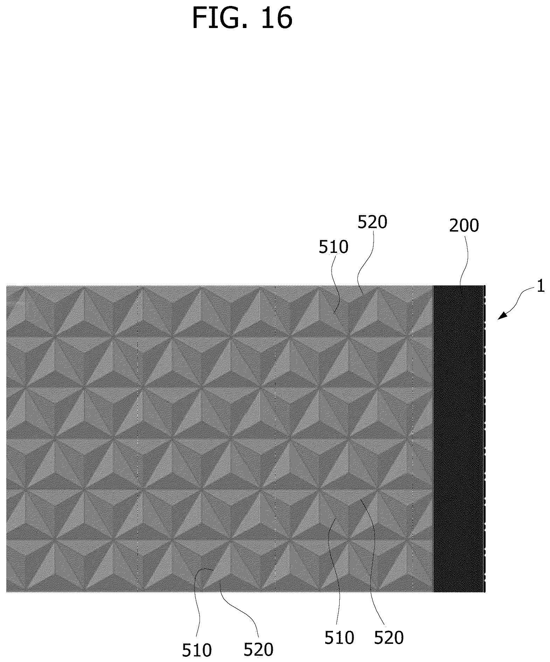

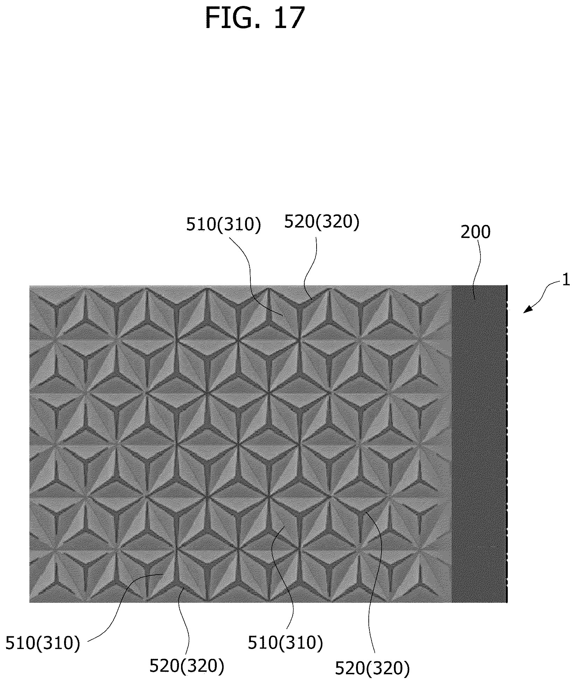

FIG. 9 is a front view of a rear lighting device for a vehicle according to a second embodiment of the present disclosure, viewed from the rear of a vehicle body. FIG. 10 is a cross-sectional view schematically showing a rear lighting device for a vehicle according to the second embodiment of the present disclosure. FIG. 11 is an exploded perspective view schematically showing a rear lighting device for a vehicle according to the second embodiment of the present disclosure. FIG. 12 is an illustrative view schematically showing a state in which a light source portion is turned off in a rear lighting device for a vehicle according to the second embodiment of the present disclosure. FIG. 13 is an illustrative view schematically showing a state in which a light source portion is turned on in a rear lighting device for a vehicle according to the second embodiment of the present disclosure. FIG. 14 is an enlarged view of a shielding layer portion in a rear lighting device for a vehicle according to the second embodiment of the present disclosure. FIG. 15 is an enlarged view of a pattern layer portion in a rear lighting device for a vehicle according to the second embodiment of the present disclosure. FIG. 16 is a front view of a rear lighting device for a vehicle according to the second embodiment of the present disclosure, viewed from the rear of a vehicle body in a state in which a light source portion is turned off. FIG. 17 is a front view of a rear lighting device for a vehicle according to the second embodiment of the present disclosure, viewed from the rear of a vehicle body in a state in which a light source portion is turned on.

Referring to FIGS. 9 to 17, a rear lighting device for a vehicle 1 according to the second embodiment of the present disclosure includes a light source portion 100, a lamp portion 200, a shielding layer portion 300, and a pattern layer portion 500. The rear lighting device for a vehicle 1 according to the second embodiment of the present disclosure may further include a housing portion 700.

The light source portion 100, the lamp portion 200, the shielding layer portion 300, and the pattern layer portion 500 may be housed in the housing portion 700. The housing portion 700 may have a box shape and be formed with an open front face facing toward the rear of the vehicle body 10.

The housing portion 700 may be mounted on the vehicle body 10. The housing portion 700 may be mounted on a rear portion of the vehicle body 10. The rear portion of the vehicle body 10 may include a tailgate 11 and a rear main body 12. The tailgate 11 here is used in a broad sense to include not only a tailgate in the narrow sense, such as that of a sport utility vehicle, but also a trunk lid of a passenger car.

The housing portion 700 may include a center housing 700A and a side housing 700B. The center housing 700A may be mounted on the tailgate 11, and the side housing 700B may be mounted on the rear main body 12 so as to be arranged alongside the center housing 700A.

A first light source 100A, a center shielding layer 300A, and a center pattern layer 500A may be housed in the center housing 700A. An opening of the center housing 700A may be covered by a center cover 600A.

A second light source 100B, a lamp 200B, a side shielding layer 300B, and a side pattern layer 500B may be housed in a side housing 700B. An opening of the side housing 700B may be covered by a side cover 600B.

The light source portion 100 may be installed inside the housing portion 700. The light source portion 100 may emit light toward the front of the lamp portion 200 or the shielding layer portion 300. Front here refers to the direction in which light is emitted from the light source portion 100. Since the present embodiment relates to the rear lighting device for a vehicle 1, when the light source portion 100 emits light toward the front of the lamp portion 200 or the shielding layer portion 300, the light is directed to the rear of the vehicle.

The light from the light source portion 100 passes through a cover portion 600 and is emitted outward, making the light visible from outside the rear lighting device for a vehicle 1. A plurality of light source portions 100 may be provided and spaced apart along a width direction of the vehicle body 10. The light source portion 100 may include a light emitting diode (LED).

The rear lighting device for a vehicle 1 may include a plurality of areas arranged along the width direction of the vehicle body 10. In FIG. 11, the rear lighting device for a vehicle 1 may be divided into an X1 area (X1), an X2 area (X2), an X3 area (X3), and an X4 area (X4) arranged along the width direction of the vehicle body 10. The X1 area (X1) and the X2 area (X2) may be arranged on the rear main body 12, and the X3 area (X3) and the X4 area (X4) may be arranged on the tailgate 11.

The light source portion 100 may include a first light source 100A arranged on the tailgate 11 or in the X3 area (X3) and the X4 area (X4), and a second light source 100B arranged on the rear main body 12 or in the X1 area (X1) and the X2 area (X2).

The lamp portion 200 may be arranged in front of the light source portion 100. The lamp portion 200 may be a tail lamp. The lamp portion 200 may include lamps 200B arranged on both sides of the rear main body 12. The lamp 200B may be arranged in the X1 area (X1).

The shielding layer portion 300 may be arranged in front of the light source portion 100 or the lamp portion 200 and partially shield light emitted from the light source portion 100. The shielding layer portion 300 may be black in color to increase light shielding efficiency and formed as a film.

The shielding layer portion 300 may include a shielding portion 310 and a first pattern portion 320. The shielding portion 310 may shield the light emitted from the light source portion 100, and the first pattern portion 320 may allow the light emitted from the light source portion 100 to be transmitted.

Since the light emitted from the light source portion 100 is shielded in an area of the shielding portion 310 and transmitted only through an area of the first pattern portion 320, a lighting pattern may be generated based on the shape of the first pattern portion 320. In FIG. 14, a black portion represents the shielding portion 310, and a white portion represents the first pattern portion 320. Since light is transmitted toward the front of the shielding layer portion 300 only through the first pattern portion 320, various rear lighting effects may be produced by changing the design of the first pattern portion 320.

The shielding layer portion 300 may include a center shielding layer 300A arranged on the tailgate 11 and side shielding layers 300B arranged on both sides of the rear main body 12. When the tailgate 11 is closed, the center shielding layer 300A and the side shielding layer 300B may be arranged at the same height.

The side shielding layer 300B may be arranged so as not to overlap the lamp 200B. In the present embodiment, the side shielding layer 300B may be arranged exclusively in the X2 area (X2) and not arranged in the X1 area (X1). Accordingly, light emitted from the light source portion 100 and passing through the lamp 200B is not shielded by the side shielding layer 300B and is directed forward. The center shielding layer 300A may be arranged in the X3 area (X3) and the X4 area (X4).

The center shielding layer 300A may have the shielding portion 310 exclusively arranged in the X3 area (X3). For example, the first light source 100A may not be arranged in the X3 area (X3).

The pattern layer portion 500 may be arranged in front of the shielding layer portion 300 and include a light-transmissive material through which light is transmitted. The pattern layer portion 500 may have second pattern portions 510 and 520.

The second pattern portions 510 and 520 may include a three-dimensional pattern through which a three-dimensional image is created. The second pattern portions 510 and 520 may include a single or double three-dimensional pattern.

A three-dimensional optical illusion pattern may be expressed on a vehicle skin by the second pattern portions 510 and 520, through which a three-dimensional image is created when the light source portion 100 is turned on. Since an optical illusion may be created using the pattern layer portion 500 without any additional structure, various pattern designs may be incorporated into rear lighting.

The second pattern portions 510 and 520 may be visible from outside the rear lighting device for a vehicle 1. The three-dimensional image of the second pattern portions 510 and 520 may be visible from the outside under both daytime and nighttime conditions.

Since the pattern layer portion 500 may be formed in the shape of a film, various patterns that are difficult to express using molded parts may be achieved. The pattern layer portion 500 may be an optical pattern film. The pattern layer portion 500 may be made of ultraviolet (UV) resin.

The pattern layer portion 500 may be made of a transparent or nearly transparent material. Since the pattern layer portion 500 is made of a transparent or nearly transparent material, when a color layer portion 400 is arranged between the pattern layer portion 500 and the shielding layer portion 300, the rear lighting device for a vehicle 1 may appear in the color of the color layer portion 400 from the outside.

The pattern layer portion 500 may include a center pattern layer 500A arranged on the tailgate 11 and side pattern layers 500B arranged on both sides of the rear main body 12. When the tailgate 11 is closed, the center pattern layer 500A and the side pattern layer 500B may be arranged at the same height. Accordingly, even if the center pattern layer 500A and the side pattern layers 500B are separately mounted on the tailgate 11 and the rear main body 12, respectively, a sense of continuity or unity may be achieved.

The side pattern layer 500B may be arranged so as not to overlap the lamp 200B. In the present embodiment, the side pattern layer 500B may be arranged exclusively in the X2 area (X2) and not arranged in the X1 area (X1). The center pattern layer 500A may be arranged in the X3 area (X3) and the X4 area (X4).

The pattern layer portion 500 may be attached to the cover portion 600 through an autoclave process.

The rear lighting device for a vehicle 1 according to the second embodiment of the present disclosure may further include the color layer portion 400.

The color layer portion 400 may be arranged between the shielding layer portion 300 and the pattern layer portion 500. Since the color layer portion 400 includes a light-transmissive material, light from the light source portion 100 passes through the shielding layer portion 300 and is emitted forward through the color layer portion 400.

The color layer portion 400 may include a film having the same color as the vehicle body. Alternatively, the color layer portion 400 may include a film coated with paint having the same color as the vehicle body.

Since the color layer portion 400 has the same color as the vehicle body 10, the rear lighting device for a vehicle 1 may create a continuous image without a sense of disconnection from the vehicle body 10.

The color layer portion 400 may include a center color layer 400A arranged on the tailgate 11 and side color layers 400B arranged on both sides of the rear main body 12. When the tailgate 11 is closed, the center color layer 400A and the side color layer 400B may be arranged at the same height. Accordingly, the center color layer 400A and the side color layers 400B may appear continuous rather than disconnected.

The side color layer 400B may be arranged so as not to overlap the lamp 200B. In the present embodiment, the side color layer 400B may be arranged exclusively in the X2 area (X2) and not arranged in the X1 area (X1). The center color layer 400A may be arranged in the X3 area (X3) and the X4 area (X4).

The center color layer 400A may be housed in the center housing 700A, and the side color layer 400B may be housed in the side housing 700B.

The lamp portion 200 may be arranged so as not to overlap the shielding layer portion 300, the pattern layer portion 500, and the color layer portion 400. Accordingly, when the lamp portion 200 performs the tail lamp function, the lamp portion 200 is not affected by the shielding layer portion 300, the pattern layer portion 500, and the color layer portion 400.

The rear lighting device for a vehicle 1 according to the second embodiment of the present disclosure may further include the cover portion 600.

The cover portion 600 is arranged in front of the pattern layer portion 500 and covers the pattern layer portion 500. The cover portion 600 may be made of plastic such as polymethyl methacrylate (PMMA) and include a light-transmissive material. The cover portion 600 may be transparent or red. In another embodiment, the cover portion 600 may include a translucent material.

The cover portion 600 may close the opening of the housing portion 700 to prevent foreign substances from entering the interior of the housing portion 700. The cover portion 600 may be formed with a planar or curved shape to conform to the shape of the opening of the housing portion 700. The cover portion 600 may be formed in the shape of a plate or panel.

The cover portion 600 may include a center cover 600A arranged on the tailgate 11 and side covers 600B arranged on both sides of the rear main body 12. When the tailgate 11 is closed, the center cover 600A and the side cover 600B may be arranged at the same height. Accordingly, even if the center cover 600A and the side covers 600B are separately mounted on the tailgate 11 and the rear main body 12, respectively, a sense of continuity or unity may be achieved.

The center cover 600A may be arranged in the X3 area (X3) and the X4 area (X4), and the side covers 600B may be arranged in the X1 area (X1) and the X2 area (X2).

Referring to FIGS. 14 to 17, the first pattern portion 320 may be arranged to overlap part or all of the second pattern portions 510 and 520.

For example, between the second pattern portions 510 and 520, the second pattern portion 510 may overlap the shielding portion 310 but not the first pattern portion 320. Accordingly, even if light is emitted from the light source portion 100, the second pattern portion 510 does not allow light to be transmitted (see FIG. 17).

Between the second pattern portions 510 and 520, the second pattern portion 520 may overlap the first pattern portion 320. Therefore, when light is emitted from the light source portion 100, the second pattern portion 520 may allow light to be transmitted (see FIG. 17). Accordingly, when the lamp 200B performs the tail lamp function, the second pattern portion 520 may perform an auxiliary tail lamp function beside the lamp 200B.

The light from the light source portion 100 arranged in the X2 area (X2), the X3 area (X3), and the X4 area (X4) is emitted forward only through the first pattern portion 320 of the shielding layer portion 300. Accordingly, by varying the overlapping areas of the first pattern portion 320 and the second pattern portions 510 and 520, various graphic images may be produced during nighttime illumination.

The first pattern portion 320 of the shielding layer portion 300 and the second pattern portion 520 of the pattern layer portion 500 may be manufactured so that their patterns are aligned with or overlap each other through an alignment mark printing method.

An operation of the rear lighting device for a vehicle 1 according to the second embodiment of the present disclosure, configured as described above, is as follows.

Referring to FIGS. 12 to 16, when the light source portion 100 is turned off under daytime conditions, the second pattern portions 510 and 520 of the pattern layer portion 500, provided in the rear lighting device for a vehicle 1, may be visible from the outside through the cover portion 600. Since the color layer portion 400 having the same color as the vehicle body 10 is arranged behind the pattern layer portion 500, the second pattern portions 510 and 520 may exhibit the same color as the vehicle body 10 and generate a three-dimensional pattern or a stereoscopic pattern. When the light source portion 100 is turned off, the lamp portion 200 may also be turned off, and accordingly, the tail lamp may not operate.

Referring to FIGS. 13 and 17, when the light source portion 100 is turned on under nighttime conditions, the second pattern portions 510 and 520 of the pattern layer portion 500, provided in the rear lighting device for a vehicle 1, may be visible from the outside through the cover portion 600. Specifically, the second pattern portion 520 overlaps the first pattern portion 320, through which light emitted from the light source portion 100 is transmitted. Therefore, light from the light source portion 100 may also be transmitted through the second pattern portion 520.

Accordingly, when viewing the rear lighting device for a vehicle 1 from the outside, the area of the second pattern portion 510 through which light is not transmitted and the area of the second pattern portion 520 through which light is transmitted appear different. This allows rear lighting patterns to be generated differently under daytime conditions (the light source portion is turned off) and under nighttime conditions (the light source portion is turned on). In other words, the lighting effect hidden by the shielding layer portion 300 when turned off becomes visible when turned on, allowing different rear images to be produced under daytime and nighttime conditions. When the light source portion 100 is turned on, the lamp portion 200 may also be turned on, and accordingly, the tail lamp may operate.

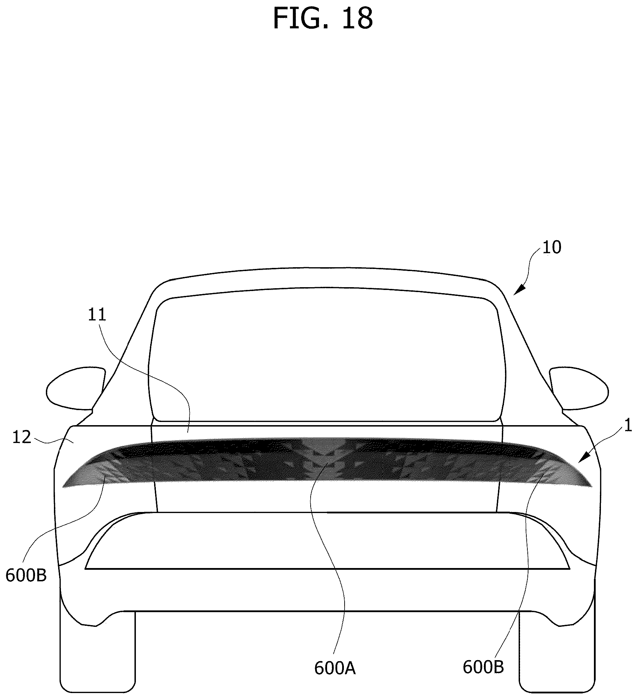

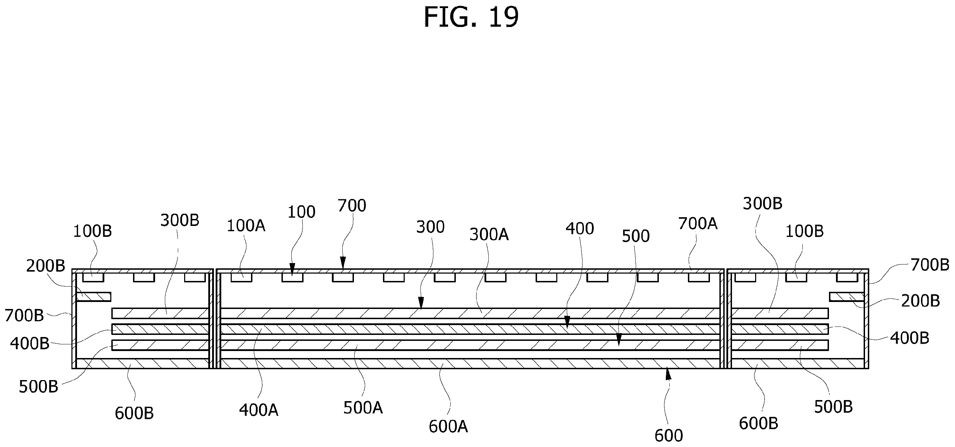

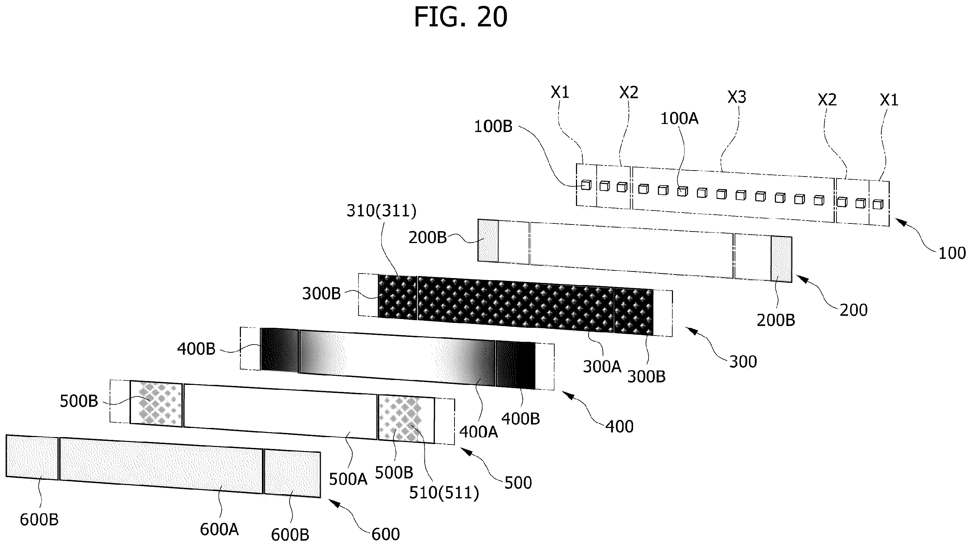

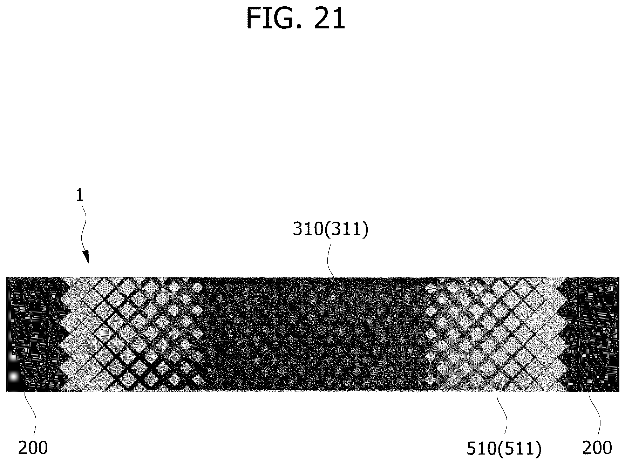

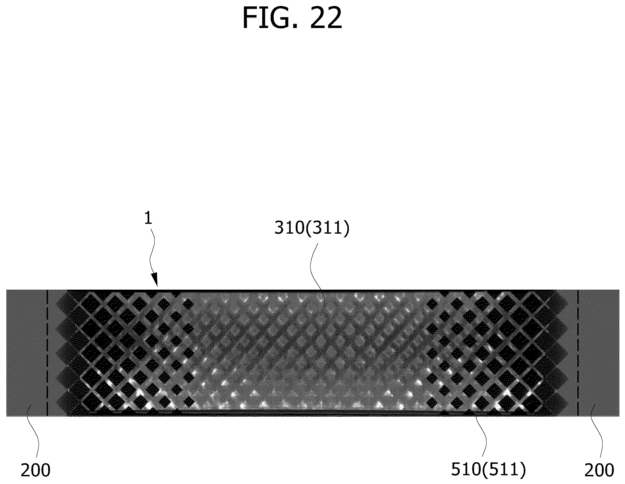

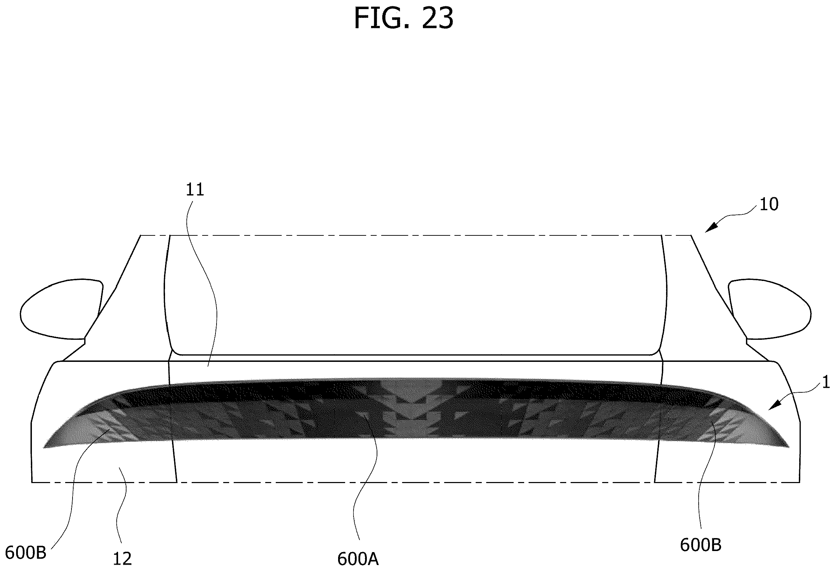

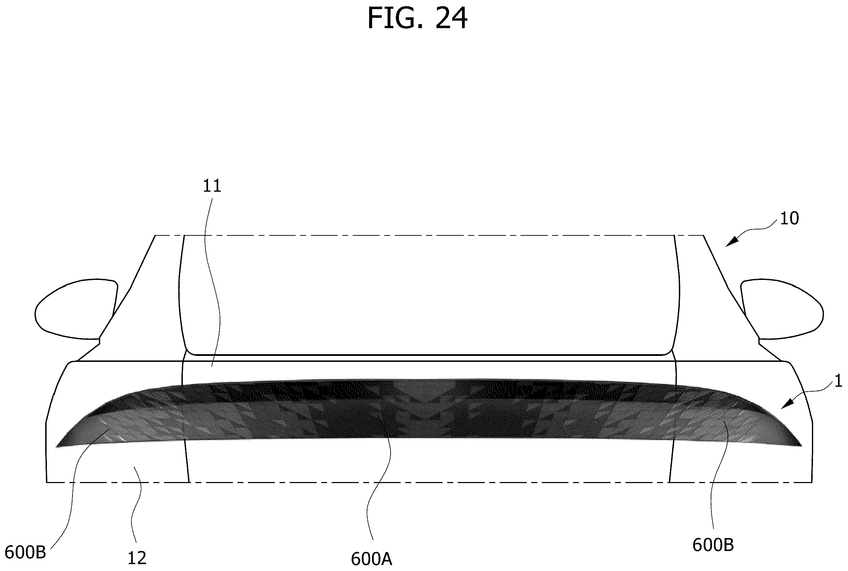

FIG. 18 is a front view of a rear lighting device for a vehicle according to a third embodiment of the present disclosure, viewed from the rear of a vehicle body. FIG. 19 is a cross-sectional view schematically showing a rear lighting device for a vehicle according to the third embodiment of the present disclosure. FIG. 20 is an exploded perspective view schematically showing a rear lighting device for a vehicle according to the third embodiment of the present disclosure. FIG. 21 is an illustrative view schematically showing a state in which a light source portion is turned off in a rear lighting device for a vehicle according to the third embodiment of the present disclosure. FIG. 22 is an illustrative view schematically showing a state in which a light source portion is turned on in a rear lighting device for a vehicle according to the third embodiment of the present disclosure. FIG. 23 is a front view of a rear lighting device for a vehicle according to the third embodiment of the present disclosure, viewed from the rear of a vehicle body in a state in which a light source portion is turned off. FIG. 24 is a front view of a rear lighting device for a vehicle according to the third embodiment of the present disclosure, viewed from the rear of a vehicle body in a state in which a light source is turned on.

Referring to FIGS. 18 to 24, a rear lighting device for a vehicle 1 according to the third embodiment of the present disclosure includes a light source portion 100, a lamp portion 200, a first pattern layer portion 300, and a second pattern layer portion 500. The rear lighting device for a vehicle 1 according to the third embodiment of the present disclosure may further include a housing portion 700.

The light source portion 100, the lamp portion 200, the first pattern layer portion 300, and the second pattern layer portion 500 may be housed in the housing portion 700. The housing portion 700 may have a box shape and be formed with an open front face facing toward the rear of the vehicle body 10.

The housing portion 700 may be mounted on the vehicle body 10. The housing portion 700 may be mounted on a rear portion of the vehicle body 10. The rear portion of the vehicle body 10 may include a tailgate 11 and a rear main body 12. The tailgate 11 here is used in a broad sense to include not only a tailgate in the narrow sense, such as that of a sport utility vehicle, but also a trunk lid of a passenger car.

The housing portion 700 may include a center housing 700A and a side housing 700B. The center housing 700A may be mounted on the tailgate 11, and the side housing 700B may be mounted on the rear main body 12 so as to be arranged alongside the center housing 700A.

A first light source 100A, a center first pattern layer 300A, and a center second pattern layer 500A may be housed in the center housing 700A. An opening of the center housing 700A may be covered by a center cover 600A.

A second light source 100B, a lamp 200B, a side first pattern layer 300B, and a side second pattern layer 500B may be housed in a side housing 700B. An opening of the side housing 700B may be covered by a side cover 600B.

The light source portion 100 may be installed inside the housing portion 700. The light source portion 100 may emit light toward the front of the lamp portion 200 or the first pattern layer portion 300. Front here refers to the direction in which light is emitted from the light source portion 100. Since the present embodiment relates to the rear lighting device for a vehicle 1, when the light source portion 100 emits light toward the front of the lamp portion 200 or the first pattern layer portion 300, the light is directed to the rear of the vehicle.

The light from the light source portion 100 passes through a cover portion 600 and is emitted outward, making the light visible from outside the rear lighting device for a vehicle 1. A plurality of light source portions 100 may be provided and spaced apart along a width direction of the vehicle body 10. The light source portion 100 may include a light emitting diode (LED).

The rear lighting device for a vehicle 1 may include a plurality of areas arranged along the width direction of the vehicle body 10. In FIG. 20, the rear lighting device for a vehicle 1 may be divided into an X1 area (X1), an X2 area (X2), and an X3 area (X3) arranged along the width direction of the vehicle body 10. The X1 area (X1) and the X2 area (X2) may be arranged on the rear main body 12, and the X3 area (X3) may be arranged on the tailgate 11.

The light source portion 100 may include a first light source 100A arranged on the tailgate 11 or in the X3 area (X3), and a second light source 100B arranged on the rear main body 12 or in the X1 area (X1) and the X2 area (X2).

The lamp portion 200 may be arranged in front of the light source portion 100. The lamp portion 200 may be a tail lamp. The lamp portion 200 may include lamps 200B arranged on both sides of the rear main body 12. The lamp 200B may be arranged in the X1 area (X1).

The first pattern layer portion 300 may be arranged in front of the light source portion 100 or the lamp portion 200. The first pattern layer portion 300 may be arranged between the light source portion 100 and the cover portion 600. The first pattern layer portion 300 may be spaced apart from the cover portion 600.

The first pattern layer portion 300 may include a transmissive material that allows light emitted from the light source portion 100 to pass through. The first pattern layer portion 300 may be black in color and may be formed as a lens or film.

The first pattern layer portion 300 may have a first pattern portion 310. The first pattern portion 310 may include a three-dimensional pattern 311. The three-dimensional pattern 311 may be either a lencell pattern or a lenticular pattern. The first pattern portion 310 may include a single or double three-dimensional pattern.

The first pattern portion 310 may be visible from the outside. In detail, when the light source portion 100 is turned off under daytime conditions, the first pattern portion 310 may not be visible from the outside. However, when the light source unit 100 is turned on under nighttime conditions, the first pattern portion 310 may create a three-dimensional image that is visible from the outside through the cover portion 600. Accordingly, when the lamp 200B performs the tail lamp function, the first pattern layer portion 300 may perform an auxiliary tail lamp function beside the lamp 200B.

The first pattern layer portion 300 may include a center first pattern layer 300A arranged on the tailgate 11 and side first pattern layers 300B arranged on both sides of the rear main body 12. When the tailgate 11 is closed, the center first pattern layer 300A and the side first pattern layer 300B may be arranged at the same height.

The side first pattern layer 300B may be arranged so as not to overlap the lamp 200B. In the present embodiment, the side first pattern layer 300B may be arranged exclusively in the X2 area (X2) and not arranged in the X1 area (X1). Accordingly, light emitted from the light source portion 100 and passing through the lamp 200B is directed forward without passing through the side first pattern layer 300B. The center first pattern layer 300A may be arranged in the X3 area (X3). Both the center first pattern layer 300A and the side first pattern layer 300B may include the first pattern portion 310.

The second pattern layer portion 500 may be arranged in front of the first pattern layer portion 300. The second pattern layer portion 500 may be arranged between the first pattern layer portion 300 and the cover portion 600. The second pattern layer portion 500 may be spaced apart from the cover portion 600 and/or the first pattern layer portion 300. In another embodiment, the second pattern layer portion 500 may be coupled to the cover portion 600 and/or the first pattern layer portion 300.

The second pattern layer portion 500 may include a transmissive material that allows light emitted from the light source portion 100 to pass through. The second pattern layer portion 500 may be formed as a lens or film.

Since the second pattern layer portion 500 may be formed as a film, various patterns that are difficult to express using molded parts may be achieved. The second pattern layer portion 500 may be an optical pattern film. The second pattern layer portion 500 may be made of ultraviolet (UV) resin.

The second pattern layer portion 500 may have a second pattern portion 510. The second pattern portion 510 may be arranged on both sides of the second pattern layer portion 500. The second pattern portion 510 may be provided at both longitudinal end portions of the second pattern layer portion 500 or on the side second pattern layer 500B.

The second pattern portion 510 may include a two-dimensional pattern 511. The two-dimensional pattern 511 may be visible from the outside. In detail, when the light source portion 100 is turned off under daytime conditions, the two-dimensional pattern 511 may be visible from the outside through the cover portion 600. In addition, when the light source portion 100 is turned on under nighttime conditions, the two-dimensional pattern 511 may be visible from the outside through the cover portion 600. The two-dimensional image of the second pattern portion may be visible from the outside under both daytime and nighttime conditions.

In an embodiment, the two-dimensional pattern 511 may be formed by etching pigment painted on the surface of the second pattern layer portion 500. In addition, the two-dimensional pattern 511 may be formed by laser etching. In another embodiment, the two-dimensional pattern 511 may be formed on the surface of the second pattern layer portion 500 by film printing.

A plurality of the two-dimensional patterns 511 may be provided on the second pattern layer portion 500. The plurality of two-dimensional patterns 511 may have different degrees of transparency. For example, the plurality of two-dimensional patterns 511 may gradually decrease in degree of transparency toward an end of the second pattern layer portion 500.

The second pattern layer portion 500 may include a center second pattern layer 500A arranged on the tailgate 11 and side second pattern layers 500B arranged on both sides of the rear main body 12. When the tailgate 11 is closed, the center second pattern layer 500A and the side second pattern layer 500B may be arranged at the same height. Accordingly, even if the center second pattern layer 500A and the side second pattern layers 500B are separately mounted on the tailgate 11 and the rear main body 12, respectively, a sense of continuity or unity may be achieved.

The side second pattern layer 500B may be arranged so as not to overlap the lamp 200B. In the present embodiment, the second pattern layer 500B may be arranged exclusively in the X2 area (X2) and not arranged in the X1 area (X1). The center second pattern layer 500A may be arranged in the X3 area (X3).

The second pattern layer portion 500 may be attached to the cover portion 600 through an autoclave process.

The second pattern layer portion 500 may include a color layer. The second pattern layer portion 500 may include a film having the same color as the vehicle body. Alternatively, the second pattern layer portion 500 may include a film coated with paint having the same color as the vehicle body.

Since the second pattern layer portion 500 has the same color as the vehicle body 10, the rear lighting device for a vehicle 1 may create a continuous image without a sense of disconnection from the vehicle body 10.

The rear lighting device for a vehicle 1 according to an embodiment of the present disclosure may further include a gradation layer portion 400.

The gradation layer portion 400 may be arranged between the first pattern layer portion 300 and the second pattern layer portion 500. Since the gradation layer portion 400 includes a light-transmissive material, light from the light source portion 100 passes through the first pattern layer portion 300 and is emitted forward through the gradation layer portion 400.

The gradation layer portion 400 may be formed as a lens or film.

The gradation layer portion 400 may be black in color and may gradually become darker toward end portions. In an example, the gradation layer portion 400 may have the darkest black color at the end portions and may become brighter in brightness from the end portions toward the center.

The gradation layer portion 400 may include a center gradation layer 400A arranged on the tailgate 11 and side gradation layers 400B arranged on both sides of the rear main body 12. When the tailgate 11 is closed, the center gradation layer 400A and the side gradation layer 400B may be arranged at the same height. Accordingly, the center gradation layer 400A and the side gradation layer 400B may appear continuous rather than disconnected.

The side gradation layer 400B may be arranged so as not to overlap the lamp 200B. In the present embodiment, the side gradation layer 400B may be arranged exclusively in the X2 area (X2) and not arranged in the X1 area (X1). The center gradation layer 400A may be arranged in the X3 area (X3).

The center gradation layer 400A may be housed in the center housing 700A, and the side gradation layer 400B may be housed in the side housing 700B.

The lamp portion 200 may be arranged so as not to overlap the first pattern layer portion 300, the second pattern layer portion 500, and the gradation layer portion 400. Accordingly, when the lamp portion 200 performs the tail lamp function, the lamp portion 200 is not affected by the first pattern layer portion 300, the second pattern layer portion 500, and the gradation layer portion 400.

The rear lighting device for a vehicle 1 according to the third embodiment of the present disclosure may further include the cover portion 600.

The cover portion 600 is arranged in front of the second pattern layer portion 500 and covers the second pattern layer portion 500. The cover portion 600 may be made of plastic such as polymethyl methacrylate (PMMA) and include a light-transmissive material. The cover portion 600 may be transparent or red. In another embodiment, the cover portion 600 may include a translucent material.

The cover portion 600 may close the opening of the housing portion 700 to prevent foreign substances from entering the interior of the housing portion 700. The cover portion 600 may be formed with a planar or curved shape to conform to the shape of the opening of the housing portion 700. The cover portion 600 may be formed in the shape of a plate or panel.

The cover portion 600 may include a center cover 600A arranged on the tailgate 11 and side covers 600B arranged on both sides of the rear main body 12. When the tailgate 11 is closed, the center cover 600A and the side covers 600B may be arranged at the same height. Accordingly, even if the center cover 600A and the side covers 600B are separately mounted on the tailgate 11 and the rear main body 12, respectively, a sense of continuity or unity may be achieved.

The center cover 600A may be arranged in the X3 area (X3), and the side cover 600B may be arranged in the X1 area (X1) and the X2 area (X2).

An operation of the rear lighting device for a vehicle 1 according to the third embodiment of the present disclosure, configured as described above, is as follows.

The first pattern portion 310 provided on the first pattern layer portion 300 may be a lencell pattern or a lenticular pattern. Referring to FIGS. 21 and 23, when the light source portion 100 is turned off under daytime conditions, the second pattern portion 510 provided on the second pattern layer portion 500 may be visible from the outside through the cover portion 600. However, the first pattern portion 310 may not be visible or may be difficult to see from the outside through the cover portion 600.

Since the second pattern layer portion 500 may have the same color as the vehicle body 10, the second pattern portion 510 may have the same color as the vehicle body 10 and generate a two-dimensional pattern. When the light source portion 100 is turned off, the lamp portion 200 may also be turned off, and accordingly, the tail lamp may not operate.

Referring to FIGS. 22 and 24, when the light source portion 100 is turned on under nighttime conditions, the two-dimensional pattern 511 of the second pattern layer portion 500 may be visible from the outside through the cover portion 600, and the three-dimensional pattern 311 of the first pattern layer portion 300, which is a lencell pattern or a lenticular pattern, may also be visible from the outside through the cover portion 600.

Accordingly, different rear lighting patterns may be created for daytime (the light source portion is turned off) and nighttime (the light source portion is turned on). In other words, the lighting effect, hidden when turned off, becomes visible when turned on, allowing different rear images to be produced under daytime and nighttime conditions. When the light source portion 100 is turned on, the lamp portion 200 may also be turned on, and accordingly, the tail lamp may operate.

The rear lighting device for a vehicle according to the present embodiment includes the first pattern layer portion 300 provided with the three-dimensional pattern 411, which creates a three-dimensional image when the light source portion 100 is turned on, thereby expressing a three-dimensional illusion pattern on the plain vehicle skin.

The rear lighting device for a vehicle according to the embodiment of the present disclosure may achieve market differentiation by providing images both when turned on and when turned off.

The vehicle rear lighting device according to the present embodiment may achieve a natural image transition between the three-dimensional pattern 411 and the two-dimensional pattern 511 through the combination of the first pattern layer portion 300 provided with the three-dimensional pattern 411 and the second pattern layer portion 500 provided with the two-dimensional pattern 511.

Although embodiments of the present disclosure have been described with reference to the accompanying drawings, these embodiments are merely exemplary, and those skilled in the art will appreciate that various modifications and other equivalent embodiments can be made from these embodiments disclosed herein. Thus, the true technical scope of the disclosure should be defined by the claims below.

## Claims

1. A rear lighting device for a vehicle, the rear lighting device comprising:
a light source portion configured to emit light;
a lamp portion arranged in front of the light source portion;
a pattern layer portion arranged in front of the light source portion and configured to have pattern portions having different light transmittances; and
a color layer portion arranged in front of the pattern layer portion and configured to include a light-transmissive material.

2. The rear lighting device of claim 1, wherein the color layer portion has a same color as a vehicle body.

3. The rear lighting device of claim 1 or 2, wherein the color layer portion includes a film having the same color as the vehicle body or a film coated with paint having the same color as the vehicle body.

4. The rear lighting device of any one of claims 1 to 3, further comprising:
a cover portion arranged in front of the color layer portion to cover the color layer portion and made of a transparent material.

5. The rear lighting device of any one of claims 1 to 4, wherein the pattern portion includes:
a first pattern portion through which light emitted from the light source portion passes; and
a second pattern portion configured to have lower light transmittance than the first pattern portion.

6. The rear lighting device of claim 5, wherein the pattern portion further includes a third pattern portion formed in a shape of stripes, arranged across the first pattern portion and the second pattern portion, and configured to have lower light transmittance than the first pattern portion.

7. The rear lighting device of any one of claims 1 to 6, further comprising:
a housing portion configured to house the light source portion, the lamp portion and the pattern layer portion and mounted on a rear portion of a vehicle body.

8. The rear lighting device of claim 7, wherein the housing portion includes:
a center housing mounted on a tailgate; and
a side housing mounted on a rear main body of the vehicle.

9. The rear lighting device of any one of claims 1 to 8, wherein the lamp portion is arranged so as not to overlap the pattern layer portion.

10. A rear lighting device for a vehicle, the rear lighting device comprising:
a light source portion configured to emit light;
a lamp portion arranged in front of the light source portion;
a shielding layer portion that includes a shielding portion arranged in front of the lamp portion and configured to shield light emitted from the light source portion, and a first pattern portion through which the light emitted from the light source portion is transmitted; and
a pattern layer portion arranged in front of the shielding layer portion, configured to include a light-transmissive material, and configured to have a second pattern portion.

11. The rear lighting device of claim 10, further comprising:
a color layer portion arranged between the shielding layer portion and the pattern layer portion, and configured to

12. The rear lighting device of claim 10 or 11, wherein the first pattern portion is arranged to overlap the second pattern portion.

13. A rear lighting device for a vehicle, the rear lighting device comprising:
a light source portion configured to emit light;
a lamp portion arranged in front of the light source portion,
a first pattern layer portion arranged in front of the light source portion, configured to have a first pattern portion, and configured to include a light-transmissive material; and
a second pattern layer portion arranged in front of the first pattern layer portion, configured to have a second pattern portion, and configured to include a light-transmissive material.

14. The rear lighting device of claim 13, wherein the second pattern layer portion has a same color as a vehicle body.

15. The rear lighting device of claim 13 or 14, further comprising:
a gradation layer portion arranged between the first pattern layer portion and the second pattern layer portion, and configured to include a light-transmissive material.
